(19) Europäisches Patentamt
European Patent Office
Office européen des brevets

(11) **EP 4 498 391 A1**

(12) **EUROPEAN PATENT APPLICATION**
published in accordance with Art. 153(4) EPC

(43) Date of publication:
**29.01.2025 Bulletin 2025/05**

(21) Application number: **23908691.1**

(22) Date of filing: **14.11.2023**

(51) International Patent Classification (IPC):
*H01B 7/18* (2006.01)      *H01B 7/14* (2006.01)
*H01B 11/22* (2006.01)      *H01B 9/00* (2006.01)
*H01B 13/22* (2006.01)      *G02B 6/44* (2006.01)

(52) Cooperative Patent Classification (CPC):
Y02A 30/00

(86) International application number:
**PCT/CN2023/131643**

(87) International publication number:
**WO 2024/255101 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.06.2023 CN 202310731631**

(71) Applicant: **Zhongtian Technology Submarine
Cable Co., Ltd.
Nantong, Jiangsu 226010 (CN)**

(72) Inventors:
• **NIU, Xuechao
Nantong, Jiangsu 226010 (CN)**
• **CHEN, Ziwei
Nantong, Jiangsu 226010 (CN)**
• **GU, Chunfei
Nantong, Jiangsu 226010 (CN)**

• **GU, Haoran
Nantong, Jiangsu 226010 (CN)**
• **CHEN, Zhenzhen
Nantong, Jiangsu 226010 (CN)**
• **QIU, Xingyu
Nantong, Jiangsu 226010 (CN)**
• **XIE, Shuhong
Nantong, Jiangsu 226010 (CN)**
• **XUE, Jianlin
Nantong, Jiangsu 226010 (CN)**
• **PAN, Pan
Nantong, Jiangsu 226010 (CN)**
• **CAO, Kai
Nantong, Jiangsu 226010 (CN)**

(74) Representative: **Zaboliene, Reda
Metida
Business center Vertas
Gyneju str. 16
01109 Vilnius (LT)**

(54) **PRESSURE-RESISTANT STRUCTURE, PRESSURE-RESISTANT OPTICAL CABLE AND MANUFACTURING METHOD**

(57) This disclosure relates to the technical field of photoelectric cables, and provides compression resistant structure, compression resistant photoelectric cable and production method. The compression resistant structure bendable into a loop, the compression resistant structure is arranged between an inner jacket layer and an outer jacket layer of a photoelectric cable, and comprising: a plurality of support units abutting to each other in a circumferential direction of the inner jacket layer, each of the plurality of support units comprising a first contact panel abut to the inner jacket layer and two side panels, the two side panels are connected to each end of the first contact panel, two ends of the two side panels away from the first contact panel are separated from each other, a distance between the two ends of the two side panels away from the first contact panel is less than a distance between two ends of the first contact panel; a plurality of second contact panels, the plurality of second contact panels are spaced apart along the circumferential direction of the inner jacket layer, the plurality of second contact panels each abut to the outer jacket layer, two ends of each of the plurality of second contact panels are connected to the two side panels closed to each other of two adjacent support units.

EP 4 498 391 A1

100

FIG. 1

**Description**

TECHNICAL FIELD

The disclosure relates to the technical field of photoelectric cables, particularly, relates to compression resistant structure, compression resistant photoelectric cable and production method.

BACKGROUND

Deep sea area has great pressure, photoelectric cables placed in the deep sea are subject to high hydrostatic pressure. In some applications, existing photoelectric cable needs to be fixed to a pipeline or an equipment on seabed by a fixture. However, the photoelectric cable are susceptible to radial shrinkage when subjected to hydrostatic pressure for long periods of time, and causing the photoelectric cable disengaged from the fixture, in severe cases, it can also lead to problems of slippage of the photoelectric cable, and damage of jacket of the photoelectric cable, impact on utilization of the photoelectric cable.

SUMMARY

The present application discloses a compression resistant structure, compression resistant photoelectric cable and production method, to solve above technical problems that existing photoelectric cable tends to detach from the fixture under hydraulic radial pressure.

Embodiments of this application are realized in this way:
First aspect of this application discloses a compression resistant structure, the compression resistant structure is capable of being bent into a loop, and the compression resistant structure is arranged between an inner jacket layer and an outer jacket layer of a photoelectric cable, the compression resistant structure comprising: a plurality of support units, the plurality of support units abutting against each other in a circumferential direction of the inner jacket layer, each of the plurality of support units comprises a first contact panel abutting against the inner jacket layer and two side panels, the two side panels are respectively connected to two ends of the first contact panel, two ends of the two side panels away from the first contact panel are separated from each other, a distance between the two ends of the two side panels away from the first contact panel is less than a distance between the two ends of the first contact panel; a plurality of second contact panels, the plurality of second contact panels are spaced apart along the circumferential direction of the inner jacket layer, each of the plurality of second contact panels abuts against the outer jacket layer, two ends of each of the plurality of second contact panels are respectively connected to the two side panels of two adjacent support units.

When the compression resistant photoelectric cable of this disclosure is applied, the compression resistant photoelectric cable is placed in deep-sea environment, and the compression resistant photoelectric cable is clamped on a deep-sea pipeline or a deep-sea equipment by a fixture. A hydrostatic pressure and a clamping force provided by the fixture are transmitted to the compressive resistant structure through the outer jacket layer, and apply a radial pressure to the second contact panel abutted on the outer jacket layer, and the second contact panel has a tendency to approach the inner jacket layer in a radial direction along the inner jacket layer, and radial pressure is applied to two first contact panel of two support units by means of the two side panels at two ends of the second contact panel (belonging to two adjacent support units). A distance of two ends of the two side panels away from the first contact panel is less than a distance of two ends of the first contact panel, and an angle between each the two side panels and the first contact panel and another angle between each of the two side panels and the second contact panel are acute, therefore, when the second contact panel applies the radial pressure to the first contact panel through the two side panels, the angle between of each the two side panels and the first contact panel tends to decrease, therefore, connection area of the first contact panel and the two side panels of the two support units tend to be close to each other. However, two adjacent support units of the compression resistant structure of this disclosure abutting against to each other in the circumferential direction of the inner jacket layer, and there is no space between two adjacent support units to allow them to approach each other further, therefore, the compression resistant structure is able to maintain a reliable and stable shape when subjected to the hydrostatic pressure and the clamping force, and can avoid the cable core to bear the hydrostatic pressure and clamping force, and also significantly reduce deformation of the compressive contact structure, to avoid deformation of the compressive contact structure of the compressive compression resistant photoelectric cable after long-term use, so that ensure the compressive compression resistant photoelectric cable can be fixtured and stably clamped at the deep-sea pipeline or the deep-sea equipment, which ensure reliability of lashing of the compressive compression resistant photoelectric cable.

In one possible embodiment:
when the compression resistant structure is in an unfolded state, the first contact panel and the two side panels of each plurality of support units and the plurality of second contact panels are all flat boards, the first contact panel is parallel to the plurality of second contact panels, two adjacent first contact panels are spaced apart, two adjacent second contact panels are spaced apart.

In one possible embodiment:
a distance of two adjacent first contact panels is equal to a distance of two adjacent second contact panels, two angles of the two side panels and the first contact panel are equal.

In one possible embodiment:
the compression resistant structure is formed of a thin sheet structure by a rolling processing.

In one possible embodiment:
one end of each of the two side panels is arc-shaped connected to the first contact panel, another end of each of the two side panels is arc-shaped connected to the second contact panel.

Second aspect of this application discloses a compression resistant photoelectric cable, includes a cable core; an inner jacket layer, the inner jacket layer is arranged at outside of the cable core; an outer jacket layer, the outer jacket layer is arranged at outside of the inner jacket layer; the above-mentioned compression resistant structure, the compression resistant structure is arranged between the inner jacket layer and the outer jacket layer.

In one possible embodiment:
an inner space is defined between one side of the compression resistant structure closed to the inner jacket layer and the inner jacket layer, an outer space is defined between other side of the compression resistant structure closed to the outer jacket layer and the outer jacket layer; two ends of the compression resistant structure are opposite and spaced apart to each other, and a gap formed between the two ends? is communicated to the inner space and the outer space; the outer jacket layer defines an opening connected to the outer space and external environment.

In one possible embodiment:
the compression resistant photoelectric cable further comprises a first water blocking structure, the first water blocking structure is filled between the cable core and the inner jacket layer.

In one possible embodiment:
the compression resistant photoelectric cable further comprises a second water blocking structure, the second water blocking structure is filled between the inner space formed by one side of the compression resistant structure closed to the inner jacket layer and the inner jacket layer.

Third aspect of this application discloses a production method of compression resistant photoelectric cable, the production method of compression resistant photoelectric cable is configured to produce the above-mentioned compression resistant photoelectric cable, the production method of compression resistant photoelectric cable comprising: providing a cable core, wrapping an inner jacket layer around outside of the cable core to obtain a first process product; providing a compression resistant structure in an unfolded state, loading the compressive resistant structure and the first process product into a conical stranding mold simultaneous, and wrapping the compressive resistant structure around outside of the first process product, and the plurality of first contact panels of the compressive resistant structure abutting against the inner jacket layer, and the plurality of first contact panels abutting against to each other in a circumferential direction of the cable core, and the plurality of second contact panels being spaced apart in the circumferential direction of the cable core, extending the first process product wrapped with the compressive resistant structure through a vacuum sizing mold, and making the compressive resistant structure affixing to the first process product and obtaining a second process product; wrapping an outer jacket layer around outside of the second process product, and the second contact panel abutting against the outer jacket layer to obtain the compression resistant photoelectric cable.

BRIEF DESCRIPTION OF DRAWINGS

In order to more clearly explain the technical scheme of the embodiment of the invention, the accompanying drawings in the embodiment will be briefly introduced below. It should be understood that the following accompanying drawings only show some and not all embodiments of the invention, so they should not be regarded as limiting the scope. For those skilled in the art, without paying creative labor, relevant drawings can also be developed from these drawings。

FIG. 1 shows a schematic diagram of a compression resistant photoelectric cable in an embodiment of the disclosure;
FIG. 2 shows a partial schematic diagram of a compression resistant photoelectric cable in an embodiment of the disclosure;
FIG. 3 shows a schematic diagram of a compression resistant structure in an embodiment of the disclosure;
FIG. 4 shows a partial schematic diagram of a compression resistant structure in another embodiment of the disclosure;
FIG. 5 shows another partial schematic diagram of a compression resistant photoelectric cable in another embodiment of the disclosure;

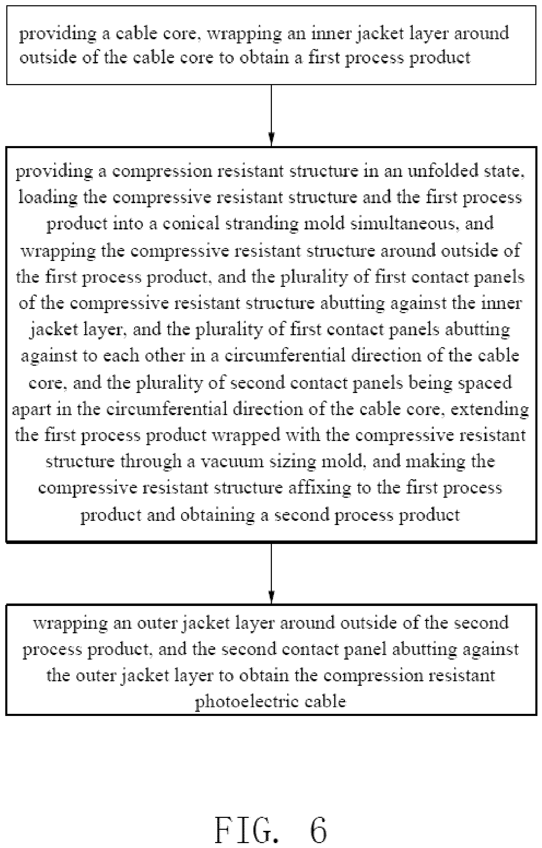

FIG. 6 shows a flowchart of the compression resistant photoelectric cable in an embodiment of the disclosure;

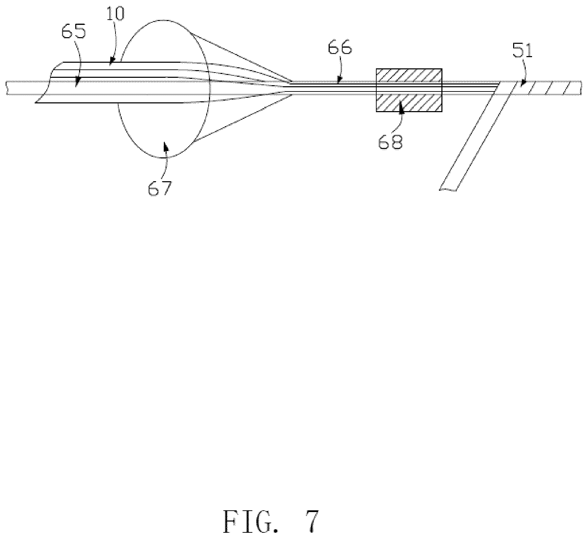

FIG. 7 shows a first manufacturing process diagram of the compression resistant photoelectric cable in an embodiment of the disclosure;
FIG. 8 shows a second manufacturing process diagram of the compression resistant photoelectric cable in an embodiment of the disclosure.

Description of main components or elements:

compression resistant photoelectric cable 100,
compression resistant structure 10,
support unit 21,
first contact panel 211,
side panel 212,
second contact panel 22,

gap 23,
cable core 30,
electric unit 31,
electric conductor 311,
electric insulating layer 312,
optical unit 32,
optical 321,
optical insulating layer 322,
inner jacket layer 40,
outer jacket layer 50,
armored layer 51,
jacket layer 52,
opening 53,
first water blocking structure 61,
second water blocking structure 62,
inner space 63,
outer space 64,
first processing product 65,
second processing product 66,
conical stranding mold 67,
vacuum sizing mold 68,
extruding mold 69,
tapping equipment 70.

DESCRIPTION OF EMBODIMENTS

The technical scheme in the embodiment of the disclosure will be described in combination with the attached drawings in the embodiment of the application. Obviously, the described embodiments are only part of the embodiments of the application, not all embodiments.

It should be noted that when an element is said to be "fixed to" another element, it can be directly on another element or there can be an intervening element. When a component is "connected" to another component, it can be directly connected to another component or there may be intermediate components at the same time. When a component is "set on" another component, it can be set directly on another component or there may be intervening components at the same time. The terms "vertical", "horizontal", "left", "right" and similar expressions used in this paper are for illustrative purposes only.

Unless otherwise defined, all technical and scientific terms used herein have the same meanings as those commonly understood by those skilled in the technical field belonging to the embodiments of the application. The terms used in the specification of the application herein are only for the purpose of describing specific embodiments, and are not intended to limit embodiments of the application.

Some embodiments of the present application are described in detail. Without conflict, the following embodiments and features in the embodiments can be combined with each other.

Some of the photoelectric cables need to work in high-pressure environments such as deep sea area and need to be fixed to a deep sea pipeline or equipment by means of a fixture, so that gravity and disturbing force of the photoelectric cables are counteracted by the fixtures fixed with the photoelectric cables. The photoelectric cables are subject to high hydrostatic pressure when working in this environment, and some of the photoelectric cables are prone to radial shrinkage under the hydrostatic pressure, which causing the photoelectric cables to detach from the fixtures, and making the fixtures unable to apply the clamping force to the photoelectric cables, or even causing the photoelectric cables to slip off, and collide with other sharp structures and break the sheaths under slipping off, thus affecting normal operation of the photoelectric cables in the deep-sea environment.

In order to improve resistance of the photoelectric cables to compression, one technology known to applicant, the photoelectric cables are prepared by cable materials with smaller deformations, however, ordinary materials with smaller deformations also have difficulty in withstanding both deep-sea water pressure and the clamping force of the fixtures, and produce large deformation and cause the photoelectric cables slip from the fixtures.

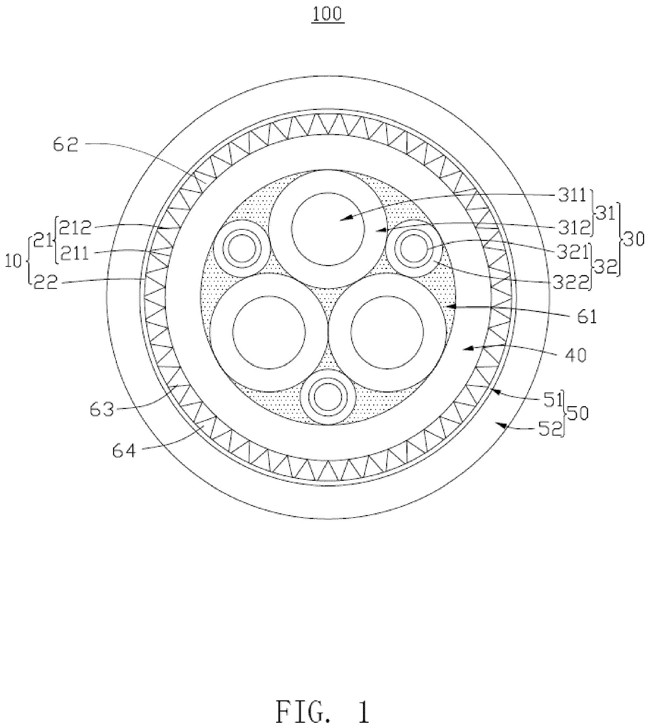

In view of the above, referring to FIGs. 1 -4, an embodiment of the present application provides a compression resistant photoelectric cable 100, the compression resistant photoelectric cable 100 is capable of withstanding both deep-sea water pressure and clamping force of the fixtures, and also produces very little deformation and is not easy to disengage from the fixtures, thus the compression resistant photoelectric cable 100 is capable of fixing to deep-sea pipelines or deep-sea equipment stable and reliable by the fixtures, and extending life of the compression resistant photoelectric cable 100 in the deep sea environment. This is illustrated exemplarily below.

Referring to FIG. 1, an embodiment of the disclosure provides a compression resistant photoelectric cable 100, the compression resistant photoelectric cable 100 includes a cable core 30, an inner jacket layer 40, an outer jacket layer 50 and a compression resistant structure 10. The inner jacket layer 40 is arranged at outside of the cable core 30. The outer jacket layer 50 is arranged at outside of the inner jacket layer 40. The compression resistant structure 10 is arranged between the inner jacket layer 40 and the outer jacket layer 50. The compression resistant structure 10 is bendable into a loop.

Referring to FIG. 1, the cable core 30 includes a plurality of electric units 31 and a plurality of second optical units 32, the plurality of electric units 31 and the plurality of second optical units 32 are twisted together to form the cable core 30. Each electric unit 31 includes an electric conductor 311 and an electric insulating layer 312 coated on the core conductor 311. The quantity of the electric unit 31 may be provided with one, two, three or more, the quantity of the optical unit 32 may be provided with one, two, three or more, exact quantities of the electric unit 31 and the optical unit 32 may be determined on basis of actual needs without specific qualification.

In one embodiment, referring to FIG. 1, the compression resistant photoelectric cable 100 further includes a first water blocking structure 61, the first water blocking structure 61 is arranged between the cable core 30 and the inner jacket layer 40. The first water blocking structure 61 is filled between adjacent core unit 31 and optical unit 32, the first water blocking structure 61 is formed as water blocking structure of a room temperature cross-linked water blocking adhesive or water blocking layer.

The inner jacket layer 40 is extruded on the outside of the cable core 30, and can be extruded by water blocking material.

Referring to FIGs.1-3, the compression resistant structure includes a plurality of support units 21 and a plurality of second contact panels 22. The plurality of support units 21 abutting against each other in a circumferential direction of the inner jacket layer 40, each of the plurality of support units 21 includes two side panels 212 and a first contact panel 211 abutting against the inner jacket layer 40, the two side panels 212 are respectively connected to two ends of the first contact panel 211, two ends of the two side panels 212 away from the first contact panel 211 are separated from each other, a distance between the two ends of the two side panels 212 away from the first contact panel 211 is less than a distance between the two ends of the first contact panel 211. The plurality of second contact panels 22 spacing apart along the circumferential direction of the inner jacket layer 40, each of the plurality of second contact panels 22 abuts against the outer jacket layer 50, two ends of each of the plurality of second contact panels 22 are connected to two side panels 212 of two adjacent support units 22.

When the compression resistant photoelectric cable 100 of this disclosure under use, the compression resistant photoelectric cable 100 is placed in deep-sea environment, and the compression resistant photoelectric cable 100 is clamped on a deep-sea pipeline or a deep-sea equipment by a fixture. The hydrostatic pressure and the clamping force provided by the fixture is transmitted to the compressive resistant structure 10 through the outer jacket layer 50, and apply a radial pressure to the second contact panel 22 abutting against on the outer jacket layer 50, and the second contact panel 22 has a tendency to approach the inner jacket layer 40 in a radial direction along the inner jacket layer 40, and applying radial pressure to two first contact panel 211 of two support units 21 by the two side panels 212 at two ends of the second contact panel 212 (belonging to two adjacent support units 22).

A distance between two ends between the two side panels 212 away from the first contact panel 211 is less than a distance between two ends of the first contact panel 211, and an angle between each the two side panels 212 and the first contact panel 211 and another angle between each of the two side panels 212 and the second contact panel 22 are acute, therefore, when the second contact panel 22 applies the radial pressure to the first contact panel 212 through the side panel 212, the angle between of each the two side panels 212 and the first contact panel 211 tends to decrease, therefore, connection area of the first contact panel 211 and the two side panels 212 of the two support units 22 tend to be close to each other. However, two adjacent support units 21 of the compression resistant structure 10 of this disclosure abutting against to each other in the circumferential direction of the inner jacket layer 40, and there is no space between two adjacent support units 22 to allow them to approach each other further, therefore, the compression resistant structure 10 is able to maintain a reliable and stable shape when subjected to the hydrostatic pressure and the clamping force, and can avoid the cable core 30 to bear the hydrostatic pressure and clamping force, and also significantly reduce deformation of the compressive contact structure 10, to avoid deformation of the compressive contact structure 10 of the compressive compression resistant photoelectric cable 100 after long-term use, so that ensure the compressive compression resistant photoelectric cable 100 can be fixtured and stably clamped at the deep-sea pipeline or the deep-sea equipment, which ensure reliability of lashing of the compressive compression resistant photoelectric cable 100.

Furthermore, the compression resistant structure 10 can achieve greater and reliable compression resistant performance with relatively thinner, fewer, and lighter materials by means of an ingenious structural setup that considers actual compression environment of photoelectric cable, thereby reducing the cost of the compression resistant photoelectric cable 100.

In one embodiment, a contact area between the first contact panel 211 and the inner jacket layer 40 is formed in line contact or face contact. A contact area between the second contact panel 211 and the outer jacket layer 50 is formed in line contact or face contact.

In one embodiment, the compression resistant structure is formed of a thin sheet structure by a rolling processing. By making the compression resistant structure 10 formed by overall processing of a single thin sheet structure, compressive resistant capacity of the first contact panel 211, the side panel 212 and the second contact panel 22 is improved, so that the compression resistant structure 10 is less likely to deform when subjected to a larger pressure, and ensure compressive resistant capacity of the compression resistant structure 10.

In one embodiment, the thin sheet structure is galvanized steel sheet, which has a strong resistance to compression. In other embodiment, the thin sheet structure can be formed by other steels or materials with higher strengths.

In one embodiment, thicknesses of the first contact panel 211, the side panel 212, and the second contact panel 22 are all T, 0.1 mm ≤ T ≤ 1 mm. In one embodiment, T=0.3mm. It should be noted that, compressive strength of the first contact panel 211, the side panel 212, and the second contact panel 22 increases with the increase of the thicknesses of them. In one embodiment, specific thicknesses of the above three may be determined according to compressive demand of the compression resistant structure 10 and outer diameter of the compression resistant photoelectric cable.

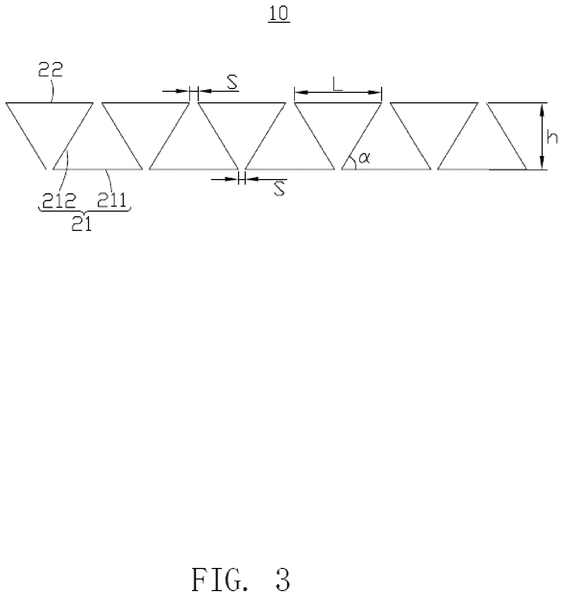

In one embodiment, referring to FIG.3, when the compression resistant structure 10 is in an unfolded state, the first contact panel 211, the two side panels 212 and the second contact panel 22 are all flat board, the first contact panel 211 is parallel to the second contact panel 212. Thus the compression resistant structure 10 can be formed by bending a thin panel structure, surface of the plurality of first contact panels 211 away from the second contact panel 22 are in one plane, surface of the plurality of second contact panels 22 away from the first contact panel 211 are in another plane.

Two adjacent first contact panels 211 are spaced apart, two adjacent second contact panels 212 are spaced apart, since an outer diameter of the inner jacket layer 40 is smaller than an inner diameter of the outer jacket layer 50, thus, after the compression resistant structure bent on the inner jacket layer 40, and two adjacent support units 21 are abutted against each other in the circumferential direction of the inner jacket layer 40, the angle between the first contact panel 211 and the side panel 212 is increased, and a circumference of a virtual circle surrounded by the plurality of second contact panels 22 is increased, and a total length of the plurality of second contact panels 22 remains unchanged, so that a space between two adjacent second contact panels 22 is increased, and the compression resistant structure 10 formed a stable and reliable self-locking structure.

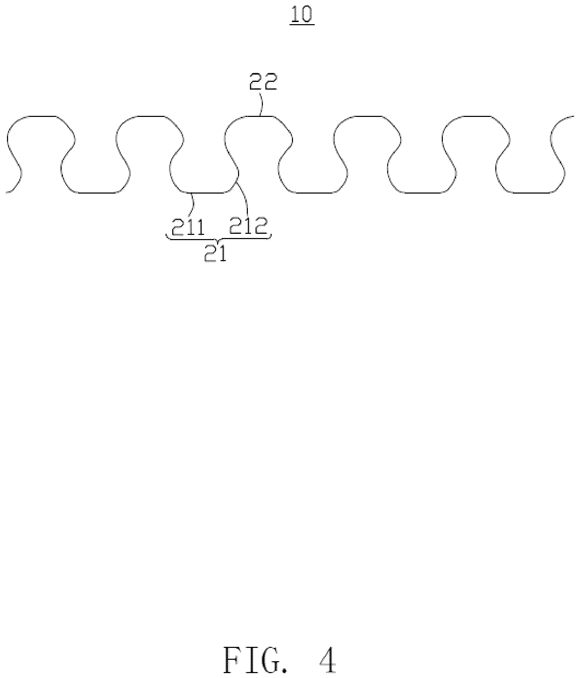

In one embodiment, referring to FIG.4, one end of the side panel 212 is connected to the first contact panel 211 in a circular transition area, and another end of the side panel 212 is connected to the second contact panel 22 in another circular transition area. Two adjacent support units 21 are contact, so that a connection of the first contact panel 211 of one support unit 21 connected with the side panel 212 is contact from other connection of the first contact panel 211 of the other support unit 21 with the side panel 212. Shapes of the first contact panel 211, the side panel 212, and the second contact panel 22 are also not limited to aforementioned straight panel, curved panel, and other panel types, and may be determined in accordance with actual compression resistant requirements.

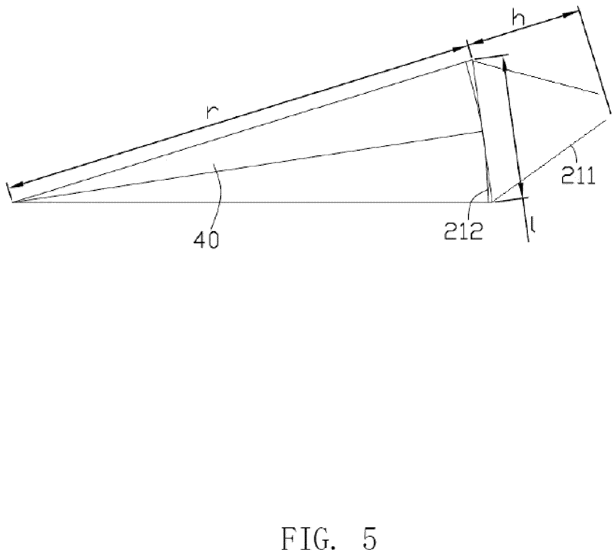

In one embodiment, referring to FIG.3 and FIG. 5, a distance between two adjacent support units 21 is equal to a distance between the two second contact panels 22 and both are s, angles between the two side panels 212 and the first contact panel 211 are equal and both are $\alpha$, a perpendicular distance h between the first contact panel 211 and the second contact panel 22 is equal to a breadth of the first contact panel 211 and breadth of the second contact panel 22 and both are L, outer diameter r of the inner jacket layer 40, and number n of the plurality of support units 21 obey the following equation:

$$L = 2r\tan\left(\frac{360}{2n}\right);$$

$$s = L - \frac{2}{\sqrt{3}}h;$$

$$h = \frac{L + 2s}{2}\cot\left(\frac{360}{2n}\right) - r.$$

By means of the above equation, each structural parameters of the compression resistant structure 10 in the unfolded state can be calculated on the premise that the outer diameter r of the inner jacket layer 40 is known, this facilitates processing of the compressive contact structure 10.

In one embodiment, angle $\alpha$ between ranges from 30° to 75°, for example, $\alpha$ may be one of 30°, 31°, 32°, 33°, 34°, 35°, 36°, 37°, 38°, 39°, 40°, 41°, 42°, 43°, 44°, 45°, 46°, 47°, 48°, 49°, 50°, 51°, 52°, 53°, 54°, 55°, 56°, 57°, 58°, 59°, 60°, 61°, 62°, 63°, 64°, 65°, 66°, 67°, 68°, 69°, 70°, 71°, 72°, 73°, 74°, 75°.

Large $\alpha$ is tend to cause the perpendicular distance h between the first contact panel 211 and the second contact panel 22 become too large, and affects outer diameter requirement of the compression resistant photoelectric cable 100; small $\alpha$ is tend to cause the compression resistant structure 10 easy to be flattened under pressure, and affects compression-resistant performance of the compression resistant photoelectric cable 100, by restricting $\alpha$ to be between 30° and 75°, it is capable of ensuring compression resistant performance of the compression resistant structure 10 under prerequisite of meeting outer diameter requirement of the compression resistant photoelectric cable 100. In one embodiment, $\alpha$ is equal to 60°, and formed two adjacent side panels 212 and the first contact panel 211 as a stable equilateral triangle structure, which has better compressive properties. Besides, angles between two adjacent side panels 212 and the first contact panel 211 are equal, which make the two side panels 212 are subject to approximately same pressure transmitted by the first contact panel 211, and pressure on two sides of the support unit 21 is more balanced, and improves stability of the support unit 21 when bearing pressure, and reduces possibility of deformation of the support unit 21 after bearing pressure.

In one embodiment, a distance between two adjacent support units 21 is different to a distance between two second contact panels 22, and angles between adjacent side panels 212 and the first contact panel 211 is different, structural parameters of the compression resistant structure 10 can be determined according to actual requirements.

In one embodiment, referring to FIG.1, an inner space 63 is defined between one side of the compression resistant structure 10 closed to the inner jacket layer 40 and the inner jacket layer 40, an outer space 64 is defined between another side of the compression resistant structure 10 closed to the outer jacket layer 50 and the outer jacket layer 50. Two ends of the compression resistant structure 10 are opposite and spaced apart to each other, and a gap 23 formed between the two ends is communicated to the inner space 63 and the outer space 64. The outer jacket layer 50 defines an opening 53 connected to the outer space 64 and external environment.

In one embodiment, the outer space 64 is space between the plurality of support units 21 and the outer jacket layer 50, the inner space 63 is space between the plurality of second contact panels 22 and the inner jacket layer 40.

When the compression resistant photoelectric cable 100 is located in an environment with greater hydrostatic pressure and greater clamping force, there is a certain risk of bending of the compression-resistant structure 10.

By forming a gap 23 in the compression-resistant structure 10, and forming an opening 53 in the outer jacket layer 50, seawater from the external environment can enter the outer space 64 through the opening 53, and seawater in the outer space 64 can enter the inner space 63 through the gap 23, thus, seawater exists on two sides of the compression resistant structure 10 in a radial direction of the cable core 30, the seawater simultaneously exerts pressure on two sides of the compression resistant structure 10 in the radial direction of the cable core 30, so that the hydrostatic pressure of seawater on the compression resistant structure 10 is balanced, and the compression resistant photoelectric cable 100 can still maintain low deformation in deep sea area, and provides a better compression resistant effect.

Furthermore, although seawater can enter to inside of the compression resistant structure 10, a first water blocking structure 61 is provided on inside of the inner jacket layer 40, so that waterproofing of the cable core 30 can be ensured.

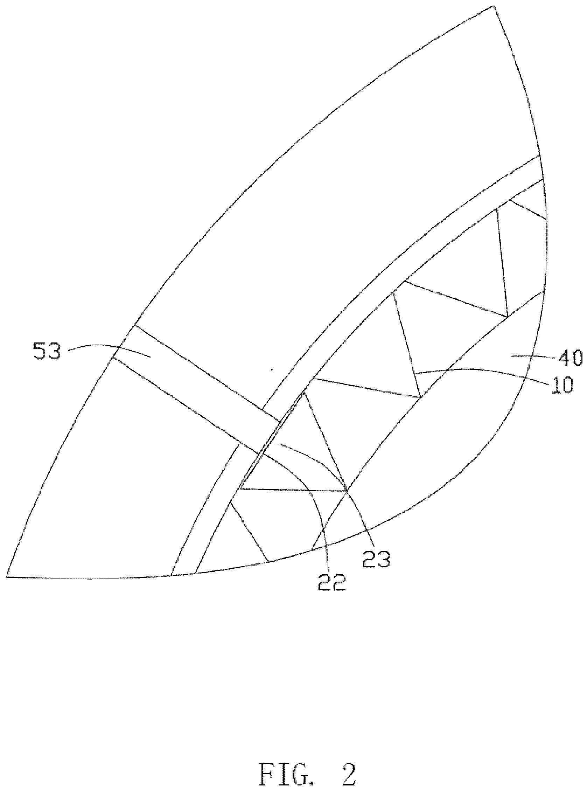

In one embodiment, referring to FIG. 2, each of two ends of the compression resistant structure 10 in the unfolded state are connected with a second contact panel 22, after the compression resistant structure 10 is wrapped around the inner jacket layer 40, two second contact panel 22 at each end of the compression resistant structure 10 may be spaced apart along a circumference of the cable core 30 to form a gap 23, or may be spaced apart in a radial direction of the cable core 30 (one of the second contact panel 22 laps over the other of the second contact panel 22) to form the gap 23.

In one embodiment, each first contact panel 211 of the two support units 21 at each end of the compression resistant structure 10 may also be connected to an adjacent second contact panels 22 by one side panel 212, therefore, after the compression resistant structure 10 is wrapped around the inner contact layer 40, the gap 23 is formed by two first contact panels 211 at each end of the compression resistant structure 10.

In one embodiment, the compression resistant structure 10 may be provided without the gap 23, and the outer jacket layer 50 may be provided without the opening 53, and a second water blocking structure 62 is provided in the inner space 63, the second water blocking structure 62 is capable of supporting the compression resistant structure 10 from inside of the compression resistant structure 10, and improve pressure-resistant property of the compression resistant structure 10.

The second water blocking structure 62 may be a water blocking adhesive or a glass adhesive.

In one embodiment, referring to FIG. 1, the outer jacket layer 50 includes an armored layer 51 and a jacket layer 52. The armored layer 51 is arranged at outside of the compression resistant structure 10, an outer surface of the compression resistant structure 10 is contact to inside of the armored layer 51, the armored layer 51 is configured to fix the compression resistant structure 10 on the inner jacket layer 40. The jacket layer 52 is arranged at outside of the armored layer 51.

The armored layers 51 is capable of tightening the compression resistant structure 10 by pressing against the second contact panel 22, and the armored layers 51 has compression resistance property to reduce pressure transmitted to the compression resistant structure 10, pressure that the compression resistant structure 10 subjected is reduced, and amount of deformation of the compression resistant structure 10 is reduced.

The outer jacket layer 50 may be extruded on outside of the armored layer 51 by a material with waterproofing materials.

In one embodiment, the outer jacket layer 50 includes a plurality of the armored layers 51, the plurality of armored layers 51 are spaced apart in a length direction of the cable core 30. Thus, it is capable of advantageous for the seawater to enter the outer space 64 from one side of the pressure-resistant structure 10 towards the outer jacket layer 50 through a gap between two adjacent armored layers 51, and enter the inner space 63 through the gap, and balanced pressure on two sides of the compression resistant structure 10.

In one embodiment, the armored layer 51 may formed by a galvanised steel strip or by a plurality of steel wires. Forming the armored layer 51 by a galvanised steel strip, it is capable of wrapping the galvanised steel strip after the process of wrapping the compression resistant structure 10, and processing efficiency of the compression resistant photoelectric cable 100 is improved. The armored layer 51 is formed by twisting steel wires, the steel wires are separately pressed against the compression resistant structure 10, so that the armored layer 51 formed of the steel wires has a better binding effect on the compression resistant structure 10 and a stronger ability to absorb seawater pressure, and further reducing pressure borne by the compression resistant structure 10.

Referring to FIG. 1, an embodiment of the disclosure further provides a production method of compression resistant photoelectric cable 100, the production method of compression resistant photoelectric cable 100 is configured to produce the compression resistant photoelectric cable 100, the production method of compression resistant photoelectric cable 100 includes:

providing a cable core 30, wrapping an inner jacket layer 40 around outside of the cable core 30 to obtain a first process product 65;
providing a compression resistant structure 10 in an unfolded state, loading the compressive resistant structure 10 and the first process product 65 into a conical stranding mold 67 simultaneous, and wrapping the compressive resistant structure 10 around outside of the first process product 65, and the plurality of first contact panels 211 of the compressive resistant structure 10 abutting against the inner jacket layer 40, and the plurality of first contact panels 211 abutting against each other in a circumferential direction of the cable core 30, and the plurality of second contact panels 22 being spaced apart in the circumferential direction of the cable core 30, extending the first process product 66 wrapped with the compressive resistant structure 10 through a vacuum sizing mold 68, and making the compressive resistant structure 10 affixing to the first process product 65 and obtaining a second process product 66;
wrapping an outer jacket layer 50 around outside of the second process product 66, and the second contact panel 22 abutting against the outer jacket layer 50 to obtain the compression resistant photoelectric cable 100.

The compression resistant photoelectric cable 100 made according to the production method of the compression resistant photoelectric cable 100 of this embodiment, the compression resistant photoelectric cable 100 is capable of withstanding both deep-sea water pressure and clamping force of the fixtures, and also produces very little deformation and is not easy to disengage from the fixtures, thus the compression resistant photoelectric cable 100 is capable of fixing to deep-sea pipelines or deep-sea equipment stable and reliable by the fixtures, and extending life of the compression resistant photoelectric cable 100 in the deep sea environment.

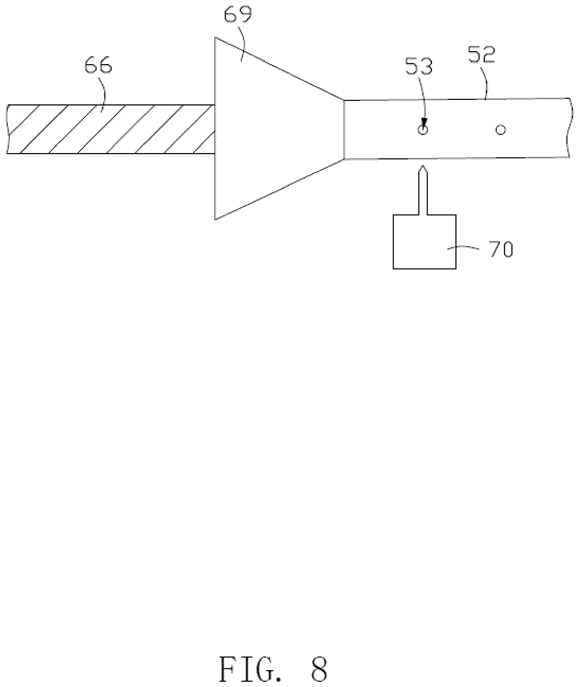

In one embodiment, referring to FIG. 8, when wrapping the compression resistant structure 10, one end of the compression resistant structure 10 overlapping another end of the compression resistant structure 10, and the gap 23 is formed between two ends of the compression resistant structure 10; the step of wrapping an outer jacket layer 50 around outside of the second process product 65 includes: wrapping an armored layer 51 around out sider of the second processing product 66, and the armored layer 51 tightening the compression resistant structure 10 over the first processing product 65; wrapping a jacket layer 52 around outside of the second process product 66 with an armored layer 51 by means of an extruding mold 69, the jacket layer 52 and the armored layer 51 formed an outer jacket layer 50, opening an opening 53 connecting to the inner space 63 of the outer sheath 50 by an opening device 70.

Through formed the opening 53 and the gap 23, seawater exists on both sides of the compression resistant structure 10 in a radial direction of the cable core 30, the seawater simultaneously exerts pressure on both sides of the compression resistant structure 10 in the radial direction of the cable core 30, so that the hydrostatic pressure of seawater on the compression resistant structure 10 is balanced, and the compression resistant photoelectric cable 100 can still maintain low deformation in deep seawater environments, and providing a better compression resistant effect.

The above implementation methods are only used to illustrate the technical solution of this application and not to limit it. Although the application has been described in detail with reference to the preferred implementation methods mentioned above, ordinary technical personnel in the art should understand that modifications or equivalent replacements to the technical solution of this application should not deviate from the spirit and scope of the technical solution of this application.

**Claims**

1.   A compression resistant structure, **characterized in that**, the compression resistant structure is bendable into a loop, and the compression resistant structure is arranged between an inner jacket layer and an outer jacket layer of a photoelectric cable, the compression resistant structure comprising:

a plurality of support units abutting against each other in a circumferential direction of the inner jacket layer, each of the plurality of support units comprises two side panels and a first contact panel abutting against the inner jacket layer, the two side panels are respectively connected to two ends of the first contact panel, two ends of the two side panels away from the first contact panel are separated from each other, a distance between the two ends of the two side panels away from the first contact panel is less than a distance between the two ends of the first contact panel;
a plurality of second contact panels spacing apart along the circumferential direction of the inner jacket layer, each of the plurality of second contact panels abuts against the outer jacket layer, two ends of each of the plurality of second contact panels are respectively connected to the two side panels of two adjacent support units.

2. The compression resistant structure of claim 1, **characterized in that**, when the compression resistant structure is in an unfolded state, the first contact panel and the two side panels of each plurality of support units and the plurality of second contact panels are all flat boards, the first contact panel is parallel to the plurality of second contact panels, two adjacent first contact panels are spaced apart, two adjacent second contact panels are spaced apart.

3. The compression resistant structure of claim 2, **characterized in that**, a distance between two adjacent first contact panels is equal to a distance between two adjacent second contact panels, two angles between the two side panels and the first contact panel are equal.

4. The compression resistant structure of claim 1, **characterized in that**, the compression resistant structure is formed of a thin sheet structure by a rolling processing.

5. The compression resistant structure of claim 1, **characterized in that**, one end of each of the two side panels is arc-shaped connected to the first contact panel, another end of each of the two side panels is arc-shaped connected to the second contact panel.

6. A compression resistant photoelectric cable, **characterized in that**, comprising:

   a cable core;
   an inner jacket layer, the inner jacket layer is arranged at outside of the cable core;
   an outer jacket layer, the outer jacket layer is arranged at outside of the inner jacket layer;
   a compression resistant structure as claimed in any one of claims 1-5, the compression resistant structure is arranged between the inner jacket layer and the outer jacket layer.

7. The compression resistant photoelectric cable of claim 6, **characterized in that**, an inner space is defined between one side of the compression resistant structure closed to the inner jacket layer and the inner jacket layer, an outer space is defined between other side of the compression resistant structure closed to the outer jacket layer and the outer jacket layer;
   two ends of the compression resistant structure are opposite and spaced apart to each other, and a gap formed between the two ends? is communicated to the inner space and the outer space;

the outer jacket layer defines an opening connected to the outer space and external environment.

8. The compression resistant photoelectric cable of claim 7, **characterized in that**, the compression resistant photoelectric cable further comprises a first water blocking structure, the first water blocking structure is filled between the cable core and the inner jacket layer.

9. The compression resistant photoelectric cable of claim 6, **characterized in that**, the compression resistant photoelectric cable further comprises a second water blocking structure, the second water blocking structure is filled between the inner space formed between one side of the compression resistant structure closed to the inner jacket layer and the inner jacket layer.

10. A production method of compression resistant photoelectric cable, **characterized in that**, the production method of compression resistant photoelectric cable is configured to produce the compression resistant photoelectric cable as claimed in any one of claims 6-9, the production method of compression resistant photoelectric cable comprising:

   providing a cable core, wrapping an inner jacket layer around outside of the cable core to obtain a first process product;
   providing a compression resistant structure in an unfolded state, loading the compressive resistant structure and the first process product into a conical stranding mold simultaneous, and wrapping the compressive resistant structure around outside of the first process product, and the plurality of first contact panels of the compressive resistant structure abutting against the inner jacket layer, and the plurality of first contact panels abutting against to each other in a circumferential direction of the cable core, and the plurality of second contact panels being spaced apart in the circumferential direction of the cable core, extending the first process product wrapped with the compressive resistant structure through a vacuum sizing mold, and making the compressive resistant structure affixing to the first process product and obtaining a second process product;
   wrapping an outer jacket layer around outside of the second process product, and the second contact panel abutting against the outer jacket layer to obtain the compression resistant photoelectric cable.

100

62

212
21
211
10
22

311
312 31
30
321
322 32

61

40

51
50
52

63

64

FIG. 1

FIG. 2

FIG. 3

FIG. 4

FIG. 5

providing a cable core, wrapping an inner jacket layer around outside of the cable core to obtain a first process product

providing a compression resistant structure in an unfolded state, loading the compressive resistant structure and the first process product into a conical stranding mold simultaneous, and wrapping the compressive resistant structure around outside of the first process product, and the plurality of first contact panels of the compressive resistant structure abutting against the inner jacket layer, and the plurality of first contact panels abutting against to each other in a circumferential direction of the cable core, and the plurality of second contact panels being spaced apart in the circumferential direction of the cable core, extending the first process product wrapped with the compressive resistant structure through a vacuum sizing mold, and making the compressive resistant structure affixing to the first process product and obtaining a second process product

wrapping an outer jacket layer around outside of the second process product, and the second contact panel abutting against the outer jacket layer to obtain the compression resistant photoelectric cable

FIG. 6

FIG. 7

FIG. 8

**INTERNATIONAL SEARCH REPORT**

International application No.

**PCT/CN2023/131643**

| A. | CLASSIFICATION OF SUBJECT MATTER |
|---|---|

H01B7/18(2006.01)i; H01B7/14(2006.01)i; H01B11/22(2006.01)i; H01B9/00(2006.01)i; H01B13/22(2006.01)i; G02B6/44(2006.01)i

According to International Patent Classification (IPC) or to both national classification and IPC

| B. | FIELDS SEARCHED |
|---|---|

Minimum documentation searched (classification system followed by classification symbols)

H01B,G02B

Documentation searched other than minimum documentation to the extent that such documents are included in the fields searched

Electronic data base consulted during the international search (name of data base and, where practicable, search terms used)

CNTXT, ENTXTC, VEN, CNKI, IEEE: 缆, 抗扭, 抗弯, 抗压, 抗折, 板, 波纹, 波浪, 三角, 齿, 峰, 谷, 弯折, 冲压, 带, 弹簧片, 弹片, 弹性片, 缓冲, cable, compression, resistan+, anti+, torsion, corrugate, bend+, peak, valley, plate, buffer

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116759146 A (ZHONGTIAN TECHNOLOGY SUBMARINE CABLES CO., LTD.) 15 September 2023 (2023-09-15)<br>claims 1-10 | 1-10 |
| Y | CN 206532619 U (XUNDAO (SHENZHEN) CORP. CO., LTD.) 29 September 2017 (2017-09-29)<br>description, paragraphs 16-21, and figure 1 | 1-10 |
| Y | CN 209947474 U (LANGFANG DAHE CABLE CO., LTD.) 14 January 2020 (2020-01-14)<br>description, paragraphs 16-23, and figure 1 | 1-10 |
| A | CN 112289486 A (YANGZHOU SAIDE CABLE CO., LTD.) 29 January 2021 (2021-01-29)<br>entire document | 1-10 |
| A | CN 114360785 A (XU PING) 15 April 2022 (2022-04-15)<br>entire document | 1-10 |
| A | CN 114460699 A (FUTONG GROUP (JIASHAN) COMMUNICATION TECHNOLOGY CO., LTD.) 10 May 2022 (2022-05-10)<br>entire document | 1-10 |

☑ Further documents are listed in the continuation of Box C.    ☑ See patent family annex.

| | |
|---|---|
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **31 January 2024** | **06 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/131643**

**C.** **DOCUMENTS CONSIDERED TO BE RELEVANT**

| Category* | Citation of document, with indication, where appropriate, of the relevant passages | Relevant to claim No. |
|---|---|---|
| A | US 6400874 B1 (CORNING CABLE SYSTEMS, LLC) 04 June 2002 (2002-06-04) entire document | 1-10 |

Form PCT/ISA/210 (second sheet) (July 2022)

**INTERNATIONAL SEARCH REPORT**
Information on patent family members

| International application No. |
| --- |
| **PCT/CN2023/131643** |

| Patent document cited in search report | | | Publication date (day/month/year) | Patent family member(s) | | | Publication date (day/month/year) |
| --- | --- | --- | --- | --- | --- | --- | --- |
| CN | 116759146 | A | 15 September 2023 | None | | | |
| CN | 206532619 | U | 29 September 2017 | None | | | |
| CN | 209947474 | U | 14 January 2020 | None | | | |
| CN | 112289486 | A | 29 January 2021 | None | | | |
| CN | 114360785 | A | 15 April 2022 | None | | | |
| CN | 114460699 | A | 10 May 2022 | None | | | |
| US | 6400874 | B1 | 04 June 2002 | DE | 19920462 | A1 | 09 November 2000 |
| | | | | EP | 1050770 | A1 | 08 November 2000 |

Form PCT/ISA/210 (patent family annex) (July 2022)